(19) Europäisches Patentamt
European Patent Office
Office européen des brevets

(11) **EP 3 165 720 A1**

(12) **EUROPEAN PATENT APPLICATION**

(43) Date of publication:
**10.05.2017 Bulletin 2017/19**

(51) Int Cl.:
*F01K 7/16* (2006.01)          *F01K 7/22* (2006.01)
*F01K 7/38* (2006.01)          *F01K 23/10* (2006.01)

(21) Application number: **16195952.3**

(22) Date of filing: **27.10.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **02.11.2015 US 201514929624**

(71) Applicant: **General Electric Company Schenectady, NY 12345 (US)**

(72) Inventors:
• **TONG, Leslie Yung Min**
  **Atlanta, GA Georgia 30339 (US)**
• **MUNDRA, Kamlesh**
  **Clifton Park, NY New York 12065 (US)**
• **NARAYANASWAMY, Kowshik**
  **560066 Bangalore, Karnataka (IN)**
• **RANCRUEL, Diego Fernando**
  **Greenville, SC South Carolina 29615 (US)**
• **RIPLEY, Tad Russel**
  **Schenectady, NY New York 12345-6000 (US)**

(74) Representative: **Foster, Christopher Michael General Electric Technology GmbH GE Corporate Intellectual Property Brown Boveri Strasse 7 5400 Baden (CH)**

(54) **STEAM TURBINE INLET TEMPERATURE CONTROL SYSTEM, COMPUTER PROGRAM PRODUCT AND RELATED METHODS**

(57) Various embodiments include a system (2) having: a computing device configured to control a power plant system (4) including a steam turbine (ST (6)), a gas turbine (GT (16)), and a heat recovery steam generator (HRSG (14)) fluidly connected with the ST (6) and the GT (16), by performing actions including: obtaining data representing a target steam specific enthalpy in a bowl section (30) of the ST (6); determining a current steam pressure at an outlet of the HRSG (14) and a current steam temperature at the outlet of the HRSG (14); calculating an actual steam specific enthalpy in the bowl section (30) of the ST (6) based upon the current steam pressure at the outlet of the HRSG (14) and the current steam temperature at the outlet the HRSG (14); and modifying a temperature of steam entering the ST (6) in response to determining that the calculated actual steam specific enthalpy in the bowl section (30) differs from the target steam specific enthalpy in the bowl section (30) by a threshold.

FIG. 1

EP 3 165 720 A1

**Description**

FIELD OF THE INVENTION

The subject matter disclosed herein relates to turbomachines (e.g., turbines). More particularly, the subject matter disclosed herein relates to controlling thermal parameters of turbines, such as steam turbines.

BACKGROUND OF THE INVENTION

Conventional combined cycle power plants employ a gas turbine system operatively coupled to a steam turbine system. The gas turbine system includes a compressor coupled to a gas turbine. The steam turbine system includes a high pressure (HP) turbine portion operatively coupled to an intermediate pressure (IP) turbine portion that, in turn, is coupled to low pressure (LP) turbine. Generally, the HP, IP and LP turbines are employed to drive a generator. In a typical combined cycle power plant, exhaust gas from the gas turbine is passed to a heat recovery steam generator (HRSG). The HRSG can have one, or multiple pressures, For a three pressure system the HRSG includes three different pressure heaters corresponding to three steam turbine pressures, e.g. HP, IP, and LP for a high performance combined cycle power plant. The HRSG also receives low energy steam from the HP steam turbine exhaust passing from the HP steam turbine. The low energy steam is used to reheat steam in the different pressure heaters for enhanced efficiency. The reheated steam is then passed back to power a lower pressure stage of the steam turbine.

One or more steam turbine sections (e.g., HP, IP and/or LP) include a bowl proximate the turbine inlet, permitting expansion of steam as it enters the turbine section and corresponding turbine stages within that section. The steam conditions at the bowl can impact several operability concerns in the steam turbine, such as rotor stress and exhaust superheat margin. As such, it is beneficial to effectively manage the steam temperatures at the bowl area.

BRIEF DESCRIPTION OF THE INVENTION

Various embodiments of the disclosure include a system having: a computing device configured to control a power plant system including a steam turbine (ST), a gas turbine (GT), and a heat recovery steam generator (HRSG) fluidly connected with the ST and the GT, by performing actions including: obtaining data representing a target steam specific enthalpy in a bowl section of the ST; determining a current steam pressure at an outlet of the HRSG and a current steam temperature at the outlet of the HRSG; calculating an actual steam specific enthalpy in the bowl section of the ST based upon the current steam pressure at the outlet of the HRSG and the current steam temperature at the outlet the HRSG; and modifying a temperature of steam entering the ST in response to determining that the calculated actual steam specific enthalpy in the bowl section differs from the target steam specific enthalpy in the bowl section by a threshold.

A first aspect of the disclosure includes a system having: a computing device configured to control a power plant system including a steam turbine (ST), a gas turbine (GT), and a heat recovery steam generator (HRSG) fluidly connected with the ST and the GT, by performing actions including: obtaining data representing a target steam specific enthalpy in a bowl section of the ST; determining a current steam pressure at an outlet of the HRSG and a current steam temperature at the outlet of the HRSG; calculating an actual steam specific enthalpy in the bowl section of the ST based upon the current steam pressure at the outlet of the HRSG and the current steam temperature at the outlet the HRSG; and modifying a temperature of steam entering the ST in response to determining that the calculated actual steam specific enthalpy in the bowl section differs from the target steam specific enthalpy in the bowl section by a threshold.

A second aspect of the disclosure includes a computer program product having program code, which when executed by one computing device, causes the at least one computing device to control a power plant system including a steam turbine (ST), a gas turbine (GT), and a heat recovery steam generator (HRSG) fluidly connected with the ST and the GT, by performing actions including: obtaining data representing a target steam specific enthalpy in a bowl section of the ST; determining a current steam pressure at an outlet of the HRSG and a current steam temperature at the outlet of the HRSG; calculating an actual steam specific enthalpy in the bowl section of the ST based upon the current steam pressure at the outlet of the HRSG and the current steam temperature at the outlet the HRSG; and modifying a temperature of steam entering the ST in response to determining that the calculated actual steam specific enthalpy in the bowl section differs from the target steam specific enthalpy in the bowl section by a threshold.

A third aspect of the disclosure includes a system having: a power plant system including: a gas turbine (GT); a heat recovery steam generator (HRSG) fluidly coupled with the GT; and a steam turbine (ST) fluidly coupled with the HRSG; and at least one computing device configured to control the power plant system, by performing actions including: obtaining data representing a target steam specific enthalpy in a bowl section of the ST; determining a current steam pressure at an outlet of the HRSG and a current steam temperature at the outlet of the HRSG; calculating an actual steam specific enthalpy in the bowl section of the ST based upon the current steam pressure at the outlet of the HRSG and the current steam temperature at the outlet the HRSG; and modifying a temperature of steam entering the ST in response to determining that the calculated actual steam specific enthalpy in the bowl section differs from the target steam specific enthalpy in the bowl section by a threshold.

BRIEF DESCRIPTION OF THE DRAWINGS

These and other features of this invention will be more readily understood from the following detailed description of the various aspects of the invention taken in conjunction with the accompanying drawings that depict various embodiments of the invention, in which:

FIG. 1 shows a schematic depiction of a system including a combined cycle (CC) power plant system, according to various embodiments of the disclosure.

FIG. 2 shows a flow diagram illustrating a method performed according to particular embodiments of the disclosure.

FIG. 3 shows an example Temperature v. Pressure graph depicting various aspects of the disclosure in comparison with conventional systems.

FIG. 4 shows an environment including a system for controlling the CC power plant system of FIG. 1, according to various embodiments of the disclosure.

It is noted that the drawings of the invention are not necessarily to scale. The drawings are intended to depict only typical aspects of the invention, and therefore should not be considered as limiting the scope of the invention. In the drawings, like numbering represents like elements between the drawings.

DETAILED DESCRIPTION OF THE INVENTION

As indicated above, the subject matter disclosed herein relates to turbomachines (e.g., turbines). More particularly, the subject matter disclosed herein relates to controlling thermal parameters of turbines, such as steam turbines.
In contrast to conventional approaches, various aspects of the disclosure include systems, computer program products and associated methods to control the inlet temperature of a steam turbine (ST) by actively controlling the upstream temperature at the heat recovery steam generator (HRSG). In various embodiments, approaches include monitoring outlet steam conditions at one or more HRSG devices (e.g., terminal attemperators), calculating steam conditions at the bowl section of the ST (after steam has partially expanded during flow from HRSG to ST), and comparing those calculated steam conditions at the bowl with model conditions (e.g., ideal conditions based upon one or more thermal models). Where the calculated conditions deviate from the model conditions, various approaches include modifying a temperature of the steam entering the ST (e.g., iteratively), until the calculated conditions match (e.g., within an acceptable margin) those model conditions. In various aspects, the temperature of steam entering the ST (from the HRSG) is driven by the temperature of gas exhaust from the GT, and as such, one approach includes modifying the firing temperature of the GT (and thus, its gas exhaust output temperature) to control the temperature of the steam exhausting from the HRSG.
In the following description, reference is made to the accompanying drawings that form a part thereof, and in which is shown by way of illustration specific example embodiments in which the present teachings may be practiced. These embodiments are described in sufficient detail to enable those skilled in the art to practice the present teachings and it is to be understood that other embodiments may be utilized and that changes may be made without departing from the scope of the present teachings.

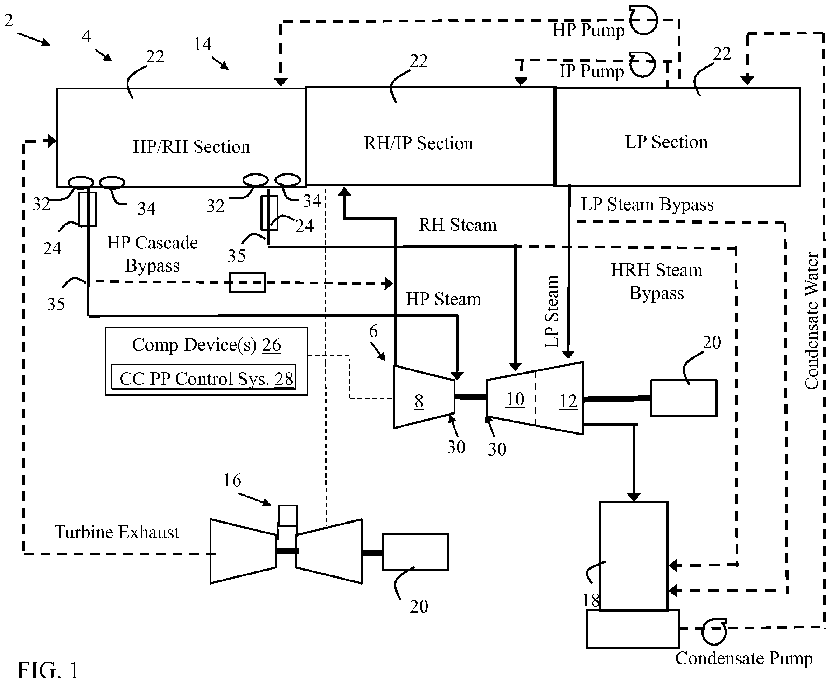

FIG. 1 shows a schematic depiction of a system 2 according to various embodiments of the disclosure. As shown, system 2 can include a combined cycle (CC) power plant system 4, including a steam turbine (ST) 6, which in the depiction shown, can include a high pressure (HP) ST 8, an intermediate pressure (IP) ST 10 and a low pressure (LP) ST 12, as is known in the art. CC power plant system 4 can further include a heat recovery steam generator (HRSG) 14 fluidly connected with the ST 6 (e.g., with HP 8, IP 10 and/or LP 12). CC power plant system 4 can further include a gas turbine (GT) 16 fluidly connected with the HRSG 14. As described herein, HRSG 14 can include a conventional HRSG device configured to utilize exhaust hot gas from GT 16 to reheat exhaust steam from ST 6 (e.g., one or more of HP 8, IP 10 and/or LP 12). CC power plant system 4 can further include a condenser 18 for condensing exhaust flow (and bypass flow) from ST 6 and HRSG 14, and providing condensed fluid (e.g., condensate water) to HRSG 14, as is known in the art. In some cases, CC power plant system 4 can include one or more generators 20, which can be coupled to ST 6 (e.g., one or more of HP 8, IP 10 and/or LP 12) and GT 16. In some cases, as shown in FIG. 1, CC power plant system 4 can include a dual-shaft configuration, where two separate generators 20 are utilized, where GT 16 is coupled with a first generator 20, and ST 6 is coupled with a second generator 20. In various embodiments, HRSG 14 can include several sections 22, corresponding with each section of ST 6 (e.g., HP/RH(reheat) section, RH/IP section and LP section), as is known in the art. Further, in some cases, HRSG 14 can include a set of HRSG devices 14, including one or more terminal attemperators 24 (e.g., downstream of HP/RH section, upstream of HP 8 and/or IP 10), as is known in the art. Terminal attemperators 24 are configured to control (e.g., raise/lower) the temperature of steam exiting the HP/RH section and entering ST 6, e.g., during startup of the CC power plant system 4 or when additional control of steam temperature is desired after leaving the HP/RH section.

As shown in FIG. 1, system 2 can include at least one computing device 26 configured to control CC power plant system 4. Computing device(s) 26 can be hardwired and/or wirelessly connected to CC power plant system 4 via any conventional means. In various embodiments, computing device(s) 26 can include a control system, as described herein, for controlling operations of CC power plant system 4. According to various embodiments, computing device(s) 26 can include a CC power plant control system 28, described with respect to various embodiments herein. CC power plant control system (CC PP Control Sys) 28 can control a power plant system (e.g., CC power plant system 4) using various processes described herein.

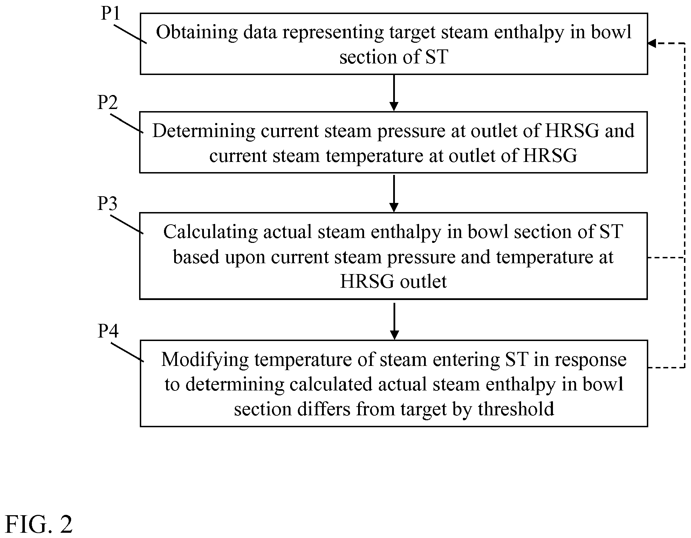

FIG. 2 shows a flow diagram illustrating a process of controlling a CC power plant system 4 according to various embodiments of the invention. These processes can be performed, e.g., by at least one computing device 26 including CC power plant control system 28, as described herein. In other cases, these processes can be performed according to a computer-implemented method of controlling CC power plant system 4. In still other embodiments, these processes can be performed by executing computer program code computing device(s) 26, causing computing device(s) 26 to control operation of CC power plant system 4. In general, the process can include the following sub-processes:

Process P1: obtaining data representing a target steam specific enthalpy in a bowl section 30 of the ST 6 (bowl section 30 shown in each of HP 8 and IP 10, for illustrative purposes). The target steam specific enthalpy can be obtained from a model of ideal steam specific enthalpy in bowl section 30 of ST 6 (e.g., HP 8, IP 10 and/or LP 12). This model can be constructed, derived, calculated, etc. from design operating conditions of the ST 6, for example, steam specific enthalpy conditions at design load, steam flow, pressure, temperature, etc. The model may be pre-constructed, and stored in a memory sector of computing device(s) 26.

Process P2: determining a current steam pressure at an outlet of HRSG 14 and a current steam temperature at the outlet of HRSG 14. This process can include obtaining data from pressure sensors 32 and temperature sensors 34 proximate outlet of HRSG 14, which measure real-time pressure and temperature of the steam exhausting from HRSG 14.

Process P3: calculating an actual steam specific enthalpy in the bowl section 30 of ST 6 based upon the current steam pressure at the outlet of HRSG 14 and the current steam temperature at outlet the HRSG 14. This process can include calculating an enthalpy of the steam exiting HRSG 14, using conventional enthalpy calculations including:

$$h = h_{\text{sat.vapor}} + \int_{Tsat}^{T} C_p(T)dT$$

$$where \qquad\qquad\qquad\qquad\qquad\qquad (Equation\ 1)$$

$$h_{\text{sat.vapor}} = h_{\text{sat.vapor}}(P) \text{ or Steam/Water Tables}$$

Table 1 and Table 2B below may be used to solve for Equation 1. Alternatively the Table 2A can be referenced directly to get the actual spec. enthalpy from sensor readings of pressure (P) and temperature (T).

TABLE 1

| Press (psi) | $h_{\text{sat-vapor}}$(btu/lb$_m$) |
|---|---|
| 100 | 1187.2 |
| 150 | 1194.1 |
| 200 | 1198.3 |
| 250 | 1201.1 |
| 300 | 1202.9 |
| 350 | 1204.0 |
| 400 | 1204.6 |

TABLES 2A, 2B

Water/Steam Specific Enthalpy (btu/lb) as a Function of Pressure and Temperature

|  | Temperature (F) | | | | | | |
|---|---|---|---|---|---|---|---|
| Press (psi) | 400 | 450 | 500 | 550 | 600 | 650 | 700 |
| 100 | 1227.4 | 1253.7 | 1279.3 | 1304.6 | 1329.6 | 1354.5 | 1379.5 |
| 150 | 1219.1 | 1247.4 | 1274.3 | 1300.5 | 1326.1 | 1351.6 | 1376.9 |
| 200 | 1210.1 | 1240.6 | 1269.0 | 1296.2 | 1322.6 | 1348.6 | 1374.3 |
| 250 | 375.1 | 1233.4 | 1263.5 | 1291.8 | 1319.0 | 1345.5 | 1371.6 |
| 300 | 375.2 | 1225.7 | 1257.7 | 1287.2 | 1315.2 | 1342.4 | 1368.9 |
| 350 | 375.2 | 1217.5 | 1251.5 | 1282.4 | 1311.4 | 1339.2 | 1366.2 |
| 400 | 375.3 | 1208.8 | 1245.1 | 1277.5 | 1307.4 | 1335.9 | 1363.4 |
| ... | | | | | | | |

Water/Steam Specific Heat (btu/lb-F) as a Function of Pressure and Temperature

|  | Temperature (F) | | | | | | |
|---|---|---|---|---|---|---|---|
| Press (psi) | 400 | 450 | 500 | 550 | 600 | 650 | 700 |
| 100 | 0.536 | 0.519 | 0.508 | 0.502 | 0.499 | 0.499 | 0.500 |
| 150 | 0.583 | 0.550 | 0.530 | 0.517 | 0.510 | 0.507 | 0.506 |
| 200 | 0.636 | 0.586 | 0.554 | 0.534 | 0.522 | 0.516 | 0.513 |
| 250 | 1.080 | 0.626 | 0.581 | 0.553 | 0.536 | 0.525 | 0.520 |
| 300 | 1.079 | 0.672 | 0.611 | 0.573 | 0.550 | 0.536 | 0.528 |
| 350 | 1.078 | 0.722 | 0.644 | 0.596 | 0.565 | 0.547 | 0.535 |
| 400 | 1.078 | 0.778 | 0.680 | 0.620 | 0.582 | 0.558 | 0.544 |
| ... | | | | | | | |

H2O is sub-cooled liquid state, property values are for the same.

Additionally, this calculation can include predicting an amount of expansion of the steam exiting HRSG 14 prior to entering bowl 30 of ST 6 (e.g., HP 8 and/or IP 10). This prediction is based upon a length and internal diameter (ID) of the conduit(s) 35 spanning between HRSG 14 and ST 6, as well as a predicted temperature drop across that conduit(s) 35 prior to entry at ST 6.

Process P4: modifying a temperature of steam entering the ST 6 (e.g., HP 8 and/or IP 10) in response to determining that the calculated actual steam specific enthalpy in the bowl section 30 differs from the target steam specific enthalpy in the bowl section 30 by a threshold. In various embodiments, the threshold corresponds with a type of the ST 6, and can include a range of enthalpy values, e.g., 1% to 2% difference in enthalpy calculation. The threshold can be used to determine whether the difference (delta) between the target enthalpy and actual calculated enthalpy is within an acceptable range, and if not, CC power plant control system 28 can modify a temperature of the steam entering the ST 6. In various embodiments, CC power plant control system 28 (via computing device(s) 26) can modify the steam temperature of steam entering the ST 6 by modifying a temperature of exhaust gas from GT 16, that is, by modifying (increasing or decreasing) the firing temperature of the GT 16. Because the exhaust gas from GT 16 is used as a heat transfer medium in HRSG 14, the firing temperature of GT 16 (which controls exhaust gas temperature at GT 16) can be used to control the amount of heat transferred to steam passing through HRSG 14 and entering ST 6. In various additional embodiments GT-IGV fuel flow and/or GT-fuel flow may be used to control exhaust temperature in GT 16.

It is understood that processes P1-P4 (or P1-P3, where P4 is not performed), can be iterated on a periodic, or constant basis. Further, processes P1-P4 can be performed in response to particular operating conditions of the CC power plant system 4, for example, when a startup operation is initiated (e.g., control instructions for startup are obtained), or when a ramp-up is initiated (e.g., control instructions for increased output are obtained). Additionally, these processes can be repeated according to any schedule to control operation of CC power plant system 4 as described herein.

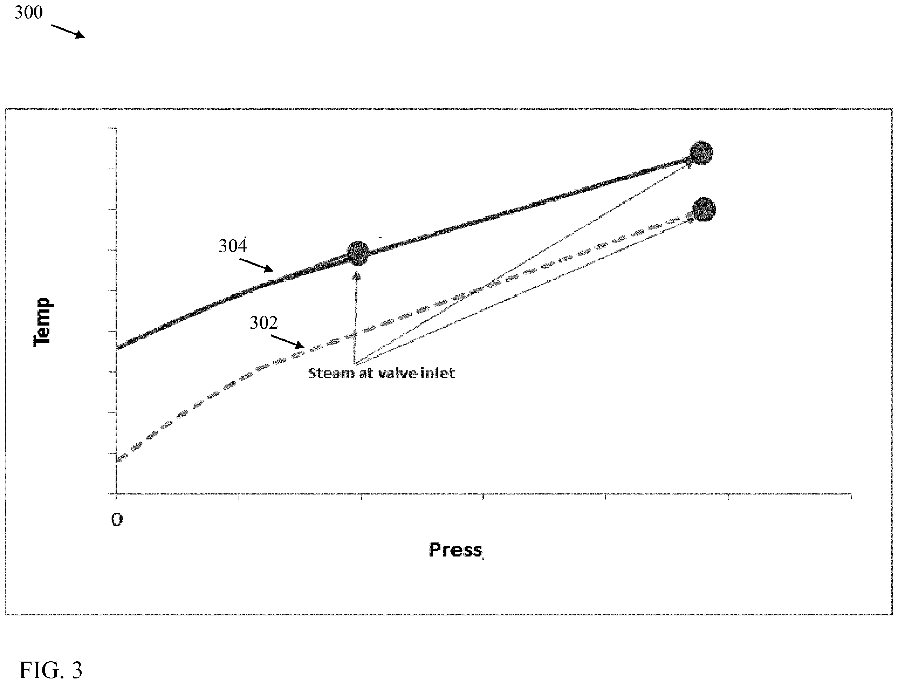

FIG. 3 shows an illustrative example graph 300 depicting various beneficial aspects of the approaches described herein. As shown, line 302 indicates the steam expansion path (expansion shown moving right-to-left on line 302) of a conventional CC power plant system during startup (e.g., full pressure startup operation), where steam expands from an HRSG to the inlet (bowl section) of a ST. Line 304 indicates the steam expansion path (expansion shown moving right-to-left on line 302) during the same startup (e.g., full pressure startup operation) of CC power plant system 4 including CC power plant control system 28. As can be seen from graph 300, CC power plant control system 28 enables CC power plant system 4 to operate at a higher steam temperature with corresponding pressure, relative to conventional systems, thereby increasing the output and efficiency of CC power plant system 4 (e.g., during startup) relative to those conventional systems.

It is understood that in the flow diagrams shown and described herein, other processes may be performed while not being shown, and the order of processes can be rearranged according to various embodiments. Additionally, intermediate processes may be performed between one or more described processes. The flow of processes shown and described herein is not to be construed as limiting of the various embodiments.

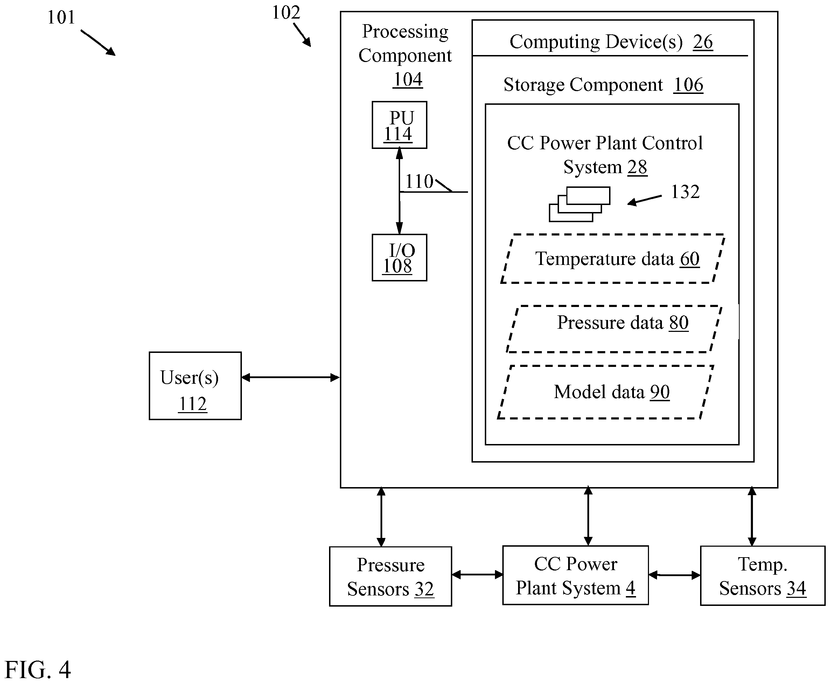

FIG. 4 shows an illustrative environment 101 including a CC power plant control system 28, for performing the functions described herein according to various embodiments of the invention. To this extent, the environment 101 includes a computer system 102 that can perform one or more processes described herein in order to monitor and/or control CC power plant system 4 (FIG. 1). In particular, the computer system 102 is shown as including the CC power plant control system 28, which makes computer system 102 operable to control/monitor operation of a CC power plant system 4 by performing any/all of the processes described herein and implementing any/all of the embodiments described herein.

The computer system 102 is shown including a computing device 26, which can include a processing component 104 (e.g., one or more processors), a storage component 106 (e.g., a storage hierarchy), an input/output (I/O) component 108 (e.g., one or more I/O interfaces and/or devices), and a communications pathway 110. In general, the processing component 104 executes program code, such as the CC power plant control system 28, which is at least partially fixed in the storage component 106. While executing program code, the processing component 104 can process data, which can result in reading and/or writing transformed data from/to the storage component 106 and/or the I/O component 108 for further processing. The pathway 110 provides a communications link between each of the components in the computer system 102. The I/O component 108 can comprise one or more human I/O devices, which enable a user (e.g., a human and/or computerized user) 112 to interact with the computer system 102 and/or one or more communications devices to enable the system user 112 to communicate with the computer system 102 using any type of communications link. To this extent, the CC power plant control system 28 can manage a set of interfaces (e.g., graphical user interface(s), application program interface, etc.) that enable human and/or system users 112 to interact with the CC power plant control system 28. Further, the CC power plant control system 28 can manage (e.g., store, retrieve, create, manipulate, organize, present, etc.) data, such as temperature data 60 (e.g., data about the temperature of steam exiting HRSG 14, as indicated by temperature sensor(s) 34), pressure data 80 (e.g., data about the pressure of steam exiting HRSG 14, as indicated by pressure sensors 32) and/or model data 90 (e.g., including threshold data derived from models of CC power plant system 4, with data such as enthalpy, pressure, temperature, flow requirements, output, etc.) using any solution, e.g., via wireless and/or hardwired means.

In any event, the computer system 102 can comprise one or more general purpose computing articles of manufacture (e.g., computing devices) capable of executing program code, such as the CC power plant control system 28, installed thereon. As used herein, it is understood that "program code" means any collection of instructions, in any language, code or notation, that cause a computing device having an information processing capability to perform a particular function either directly or after any combination of the following: (a) conversion to another language, code or notation; (b) reproduction in a different material form; and/or (c) decompression. To this extent, the CC power plant control system 28 can be embodied as any combination of system software and/or application software. It is further understood that the CC power plant control system 28 can be implemented in a cloud-based computing environment, where one or more processes are performed at distinct computing devices (e.g., a plurality of computing devices 26), where one or more of those distinct computing devices may contain only some of the components shown and described with respect to the computing device 26 of FIG. 4.

Further, the CC power plant control system 28 can be implemented using a set of modules 132. In this case, a module 132 can enable the computer system 102 to perform a set of tasks used by the CC power plant control system 28, and can be separately developed and/or implemented apart from other portions of the CC power plant control system 28. As used herein, the term "component" means any configuration of hardware, with or without software, which implements the functionality described in conjunction therewith using any solution, while the term "module" means program code that enables the computer system 102 to implement the functionality described in conjunction therewith using any solution. When fixed in a storage component 106 of a computer system 102 that includes a processing component 104, a module is a substantial portion of a component that implements the functionality. Regardless, it is understood that two or more components, modules, and/or systems may share some/all of their respective hardware and/or software. Further, it is understood that some of the functionality discussed herein may not be implemented or additional functionality may be included as part of the computer system 102.

When the computer system 102 comprises multiple computing devices, each computing device may have only a portion of CC power plant control system 28 fixed thereon (e.g., one or more modules 132). However, it is understood that the computer system 102 and CC power plant control system 28 are only representative of various possible equivalent computer systems that may perform a process described herein. To this extent, in other embodiments, the functionality provided by the computer system 102 and CC power plant control system 28 can be at least partially implemented by one or more computing devices that include any combination of general and/or specific purpose hardware with or without program code. In each embodiment, the hardware and program code, if included, can be created using standard engineering and programming techniques, respectively.

Regardless, when the computer system 102 includes multiple computing devices 26, the computing devices can communicate over any type of communications link. Further, while performing a process described herein, the computer system 102 can communicate with one or more other computer systems using any type of communications link. In either case, the communications link can comprise any combination of various types of wired and/or wireless links; comprise any combination of one or more types of networks; and/or utilize any combination of various types of transmission techniques and protocols.

While shown and described herein as a method and system for controlling operation of a CC power plant system 4 (FIG. 1), it is understood that aspects of the invention further provide various alternative embodiments. For example, in one embodiment, the invention provides a computer program fixed in at least one computer-readable medium, which when executed, enables a computer system to controlling operation of CC power plant system 4. To this extent, the computer-readable medium includes program code, such as the CC power plant control system 28 (FIG. 4), which implements some or all of the processes and/or embodiments described herein. It is understood that the term "computer-readable medium" comprises one or more of any type of tangible medium of expression, now known or later developed, from which a copy of the program code can be perceived, reproduced, or otherwise communicated by a computing device. For example, the computer-readable medium can comprise: one or more portable storage articles of manufacture; one or more memory/storage components of a computing device; paper; etc.

In another embodiment, the invention provides a method of providing a copy of program code, such as the CC power plant control system 28 (FIG. 4), which implements some or all of a process described herein. In this case, a computer system can process a copy of program code that implements some or all of a process described herein to generate and transmit, for reception at a second, distinct location, a set of data signals that has one or more of its characteristics set and/or changed in such a manner as to encode a copy of the program code in the set of data signals. Similarly, an embodiment of the invention provides a method of acquiring a copy of program code that implements some or all of a process described herein, which includes a computer system receiving the set of data signals described herein, and translating the set of data signals into a copy of the computer program fixed in at least one computer-readable medium. In either case, the set of data signals can be transmitted/received using any type of communications link.

In still another embodiment, the invention provides a method of controlling operation of a CC power plant system 4 (FIG. 1). In this case, a computer system, such as the computer system 102 (FIG. 4), can be obtained (e.g., created, maintained, made available, etc.) and one or more components for performing a process described herein can be obtained (e.g., created, purchased, used, modified, etc.) and deployed to the computer system. To this extent, the deployment can comprise one or more of: (1) installing program code on a computing device; (2) adding one or more computing and/or I/O devices to the computer system; (3) incorporating and/or modifying the computer system to enable it to perform a process described herein; etc.

In any case, the technical effect of the various embodiments of the invention, including, e.g., the CC power plant control system 28, is to control operation of a CC power plant system. It is understood that according to various embodiments, the CC power plant control system 28 could be implemented to control operation of a plurality of CC power plant systems, such as CC power plant system 4 described herein.

In various embodiments, components described as being "coupled" to one another can be joined along one or more interfaces. In some embodiments, these interfaces can include junctions between distinct components, and in other cases, these interfaces can include a solidly and/or integrally formed interconnection. That is, in some cases, components that are "coupled" to one another can be simultaneously formed to define a single continuous member. However, in other embodiments, these coupled components can be formed as separate members and be subsequently joined through known processes (e.g., fastening, ultrasonic welding, bonding).

When an element or layer is referred to as being "on", "engaged to", "connected to" or "coupled to" another element or layer, it may be directly on, engaged, connected or coupled to the other element or layer, or intervening elements or layers may be present. In contrast, when an element is referred to as being "directly on," "directly engaged to", "directly connected to" or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

**Claims**

1. A system (2) comprising:

   at least one computing device configured to control a power plant system (4) including a steam turbine (ST (6)), a gas turbine (GT (16)), and a heat recovery steam generator (HRSG (14)) fluidly connected with the ST (6) and the GT (16), by performing actions including:

      obtaining data representing a target steam specific enthalpy in a bowl section (30) of the ST (6);
      determining a current steam pressure at an outlet of the HRSG (14) and a current steam temperature at the outlet of the HRSG (14);
      calculating an actual steam specific enthalpy in the bowl section (30) of the ST (6) based upon the current steam pressure at the outlet of the HRSG (14) and the current steam temperature at the outlet the HRSG (14); and
      modifying a temperature of steam entering the ST (6) in response to determining that the calculated actual steam specific enthalpy in the bowl section (30) differs from the target steam specific enthalpy in the bowl section (30) by a threshold.

2. The system (2) of claim 1, wherein the at least one computing device is configured to modify the temperature of the steam entering the ST (6) by performing actions including modifying a temperature of exhaust gas from the GT (16) entering the HRSG (14).

3. The system (2) of claim 2, wherein the modifying of the temperature of the exhaust gas from the GT (16) includes modifying a firing temperature in the GT (16).

4. The system (2) of claim 1, wherein the calculating of the actual steam specific enthalpy includes measuring a pressure and a temperature of steam exiting the HRSG (14), and predicting an amount of expansion of the steam exiting the HRSG (14) prior to entering the ST (6) bowl.

5. The system (2) of claim 1, wherein the target steam specific enthalpy includes a model of an ideal steam specific enthalpy within the bowl section (30) of the ST (6).

6. The system (2) of claim 1, wherein the threshold includes a range corresponding with a type of the ST (6).

7. The system (2) of claim 1, wherein the HRSG (14) includes a set of HRSG (14) devices including at least one terminal attemperator.

8. A computer program product comprising program code, which when executed by at least one computing device, causes the at least one computing device to control a power plant system (4) including a steam turbine (ST (6)), a gas turbine (GT (16)), and a heat recovery steam generator (HRSG (14)) fluidly connected with the ST (6) and the GT (16), by performing actions including:

   obtaining data representing a target steam specific enthalpy in a bowl section (30) of the ST (6);
   determining a current steam pressure at an outlet of the HRSG (14) and a current steam temperature at the outlet of the HRSG (14);
   calculating an actual steam specific enthalpy in the bowl section (30) of the ST (6) based upon the current steam pressure at the outlet of the HRSG (14) and the current steam temperature at the outlet the HRSG (14); and modifying a temperature of steam entering the ST (6) in response to determining that the calculated actual steam specific enthalpy in the bowl section (30) differs from the target steam specific enthalpy in the bowl section (30) by a threshold.

9. The computer program product of claim 8, wherein the program code causes the at least one computing device to modify the temperature of the steam entering the ST (6) by performing actions including modifying a temperature of exhaust gas from the GT (16) entering the HRSG (14).

10. A system (2) comprising:

a power plant system (2) having: a gas turbine (GT (16)); a heat recovery steam generator (HRSG (14)) fluidly coupled with the GT (16); and a steam turbine (ST (6)) fluidly coupled with the HRSG (14); and
at least one computing device configured to control the power plant system (4), by performing actions including:

obtaining data representing a target steam specific enthalpy in a bowl section (30) of the ST (6);
determining a current steam pressure at an outlet of the HRSG (14) and a current steam temperature at the outlet of the HRSG (14);
calculating an actual steam specific enthalpy in the bowl section (30) of the ST (6) based upon the current steam pressure at the outlet of the HRSG (14) and the current steam temperature at the outlet the HRSG (14); and
modifying a temperature of steam entering the ST (6) in response to determining that the calculated actual steam specific enthalpy in the bowl section (30) differs from the target steam specific enthalpy in the bowl section (30) by a threshold.

FIG. 1

P1 — Obtaining data representing target steam enthalpy in bowl section of ST

P2 — Determining current steam pressure at outlet of HRSG and current steam temperature at outlet of HRSG

P3 — Calculating actual steam enthalpy in bowl section of ST based upon current steam pressure and temperature at HRSG outlet

P4 — Modifying temperature of steam entering ST in response to determining calculated actual steam enthalpy in bowl section differs from target by threshold

FIG. 2

FIG. 3

```
                                            ┌────────────────────────────────────────────┐
                                            │ Computing Device(s) 26                      │
                    ┌────────────────┐      │                                            │
                    │  Processing    │      │  Storage Component  106                     │
                    │  Component     │      │ ┌─────────────────────────────────────────┐│
                    │    104         │      │ │                                         ││
                    │                │      │ │  CC Power Plant Control                 ││
                    │  ┌─────┐       │      │ │      System 28                          ││
                    │  │ PU  │       │      │ │        ┌──┐                             ││
                    │  │ 114 │       │      │ │        │  │◄── 132                      ││
                    │  └──┬──┘       │      │ │        └──┘                             ││
                    │     │   110     │      │ │   ┌ ─ ─ ─ ─ ─ ─ ─ ─ ─ ─ ─ ─ ─ ┐        ││
                    │     │           │      │ │    Temperature data 60                 ││
                    │  ┌──┴──┐       │      │ │   └ ─ ─ ─ ─ ─ ─ ─ ─ ─ ─ ─ ─ ─ ┘        ││
                    │  │ I/O │       │      │ │                                         ││
                    │  │ 108 │       │      │ │   ┌ ─ ─ ─ ─ ─ ─ ─ ─ ─ ─ ─ ─ ─ ┐        ││
                    │  └─────┘       │      │ │    Pressure data 80                    ││
                    └────────────────┘      │ │   └ ─ ─ ─ ─ ─ ─ ─ ─ ─ ─ ─ ─ ─ ┘        ││
                                            │ │                                         ││
                ┌────────────┐              │ │   ┌ ─ ─ ─ ─ ─ ─ ─ ─ ─ ─ ─ ─ ─ ┐        ││
                │  User(s)   │◄────────────►│ │    Model data 90                      ││
                │    112     │              │ │   └ ─ ─ ─ ─ ─ ─ ─ ─ ─ ─ ─ ─ ─ ┘        ││
                └────────────┘              │ └─────────────────────────────────────────┘│
                                            └────────────────────────────────────────────┘
```

101

102

┌────────────────┐      ┌─────────────────┐      ┌──────────────┐
│   Pressure     │◄────►│   CC Power      │◄────►│    Temp.     │
│  Sensors 32    │      │ Plant System 4  │      │  Sensors 34  │
└────────────────┘      └─────────────────┘      └──────────────┘

FIG. 4

Europäisches
Patentamt

European
Patent Office

Office européen
des brevets

# EUROPEAN SEARCH REPORT

Application Number

EP 16 19 5952

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/288210 A1 (BRUECKNER JAN [DE] ET AL) 18 November 2010 (2010-11-18) * paragraphs [0013], [0025] - [0035]; figure 1 * | 1,4,5,8, 10 | INV. F01K7/16 F01K7/22 F01K7/38 F01K23/10 |
| X | EP 2 510 198 A2 (SIEMENS AG [DE]) 17 October 2012 (2012-10-17) * claim 1; figures 6,1 * | 1,8,10 | |
| X | GB 2 152 591 A (GEN ELECTRIC) 7 August 1985 (1985-08-07) * page 4, line 19 - page 5, line 22; figure 2 * | 1,8,10 | |
| A | US 8 091 361 B1 (LANG FRED D [US]) 10 January 2012 (2012-01-10) * the whole document * | 1-10 | |
| A | US 4 457 266 A (LA SPISA RONALD J [US]) 3 July 1984 (1984-07-03) * the whole document * | 1-10 | |

TECHNICAL FIELDS
SEARCHED      (IPC)

F01K

The present search report has been drawn up for all claims

| Place of search | Date of completion of the search | Examiner |
|---|---|---|
| Munich | 28 March 2017 | Röberg, Andreas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 19 5952

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2017

| Patent document cited in search report | | Publication date | Patent family member(s) | | Publication date |
|---|---|---|---|---|---|
| US 2010288210 | A1 | 18-11-2010 | AR | 069453 A1 | 20-01-2010 |
| | | | AU | 2008328934 A1 | 04-06-2009 |
| | | | BR | PI0819844 A2 | 16-06-2015 |
| | | | CA | 2706794 A1 | 04-06-2009 |
| | | | CN | 102216685 A | 12-10-2011 |
| | | | EP | 2065641 A2 | 03-06-2009 |
| | | | EP | 2212618 A2 | 04-08-2010 |
| | | | ES | 2402842 T3 | 09-05-2013 |
| | | | JP | 5318880 B2 | 16-10-2013 |
| | | | JP | 2011504996 A | 17-02-2011 |
| | | | MY | 154744 A | 15-07-2015 |
| | | | PT | 2212618 E | 24-05-2013 |
| | | | RU | 2010126182 A | 10-01-2012 |
| | | | TW | 200936957 A | 01-09-2009 |
| | | | US | 2010288210 A1 | 18-11-2010 |
| | | | WO | 2009068446 A2 | 04-06-2009 |
| | | | ZA | 201001475 B | 27-10-2010 |
| EP 2510198 | A2 | 17-10-2012 | CN | 102753789 A | 24-10-2012 |
| | | | EP | 2510198 A2 | 17-10-2012 |
| | | | US | 2013133751 A1 | 30-05-2013 |
| | | | WO | 2011069700 A2 | 16-06-2011 |
| GB 2152591 | A | 07-08-1985 | CA | 1246667 A | 13-12-1988 |
| | | | CH | 680008 A5 | 29-05-1992 |
| | | | DE | 3445791 A1 | 27-06-1985 |
| | | | FR | 2556773 A1 | 21-06-1985 |
| | | | GB | 2152591 A | 07-08-1985 |
| | | | IT | 1177447 B | 26-08-1987 |
| | | | JP | H0336125 B2 | 30-05-1991 |
| | | | JP | S60192807 A | 01-10-1985 |
| US 8091361 | B1 | 10-01-2012 | NONE | | |
| US 4457266 | A | 03-07-1984 | NONE | | |

EPO FORM P0459

For more details about this annex : see Official Journal of the European Patent Office, No. 12/82